# EUROPÄISCHE PATENTSCHRIFT

(11) **EP 1 790 581 B1**
(45) Veröffentlichungstag und Bekanntmachung des Hinweises auf die Patenterteilung: **21.09.2011**
(21) Anmeldenummer: 06023941.5
(22) Anmeldetag: 17.11.2006
(51) Int. Cl.: B65D 47/08

(54) **Klappverschluss**
Hinged closure
Fermeture munie d'une charnière

(30) Priorität: 24.11.2005 DE 102005056091
(43) Veröffentlichungstag der Anmeldung: 30.05.2007
(73) Patentinhaber: Weener Plastik AG, 26826 Weener (DE)
(72) Erfinder: Schröder, Johann, 26844 Ditzum (DE)
(74) Vertreter: Wallinger, Michael

(56) Entgegenhaltungen:
- EP-A2- 0 291 457
- EP-A2- 0 727 361
- WO-A-02/40365
- WO-A-2004/048221
- US-A1- 4 403 712
- US-A1- 5 642 824

## Beschreibung

Die Erfindung betrifft einen Klappverschluss, der ein Verschlussunterteil sowie einen an dieses Verschlussunterteil mittels wenigstens eines Filmscharniers angelenkten Klappdeckel aufweist und bei dem zumindest ein Spannband vorgesehen ist, über welches das Verschlussunterteil und der Klappdeckel verbunden sind.

Es sind bereits Klappverschlüsse bekannt, bei denen ein Klappdeckel an das Verschlussunterteil mittels eines elastischen, relativ breiten, kravatten- bzw. schmetterlingsförmigen Bandes anlenkt ist, dass im Bereich seiner endseitigen Anformlinien am Klappdeckel sowie am Verschlussunterteil jeweils konkav gekrümmt endet, und bei geschlossenem Deckel nach radial außen konvex gekrümmt ist. Dieses Band weist dabei einerseits eine Gelenkfunktion auf, und bewirkt andererseits einen Schnappeffekt.

Darüber hinaus ist auf aus der EP 0 291 457 B2 ein Klappverschluss der eingangs genannten Art bekannt. Der aus den dortigen Fig. 5 und 6 bekannte Klappverschluss weist ein den Klappdeckel an das Verschlussunterteil anlenkendes Filmscharnier auf, das - bezogen auf die Umfangsrichtung der Mantelwand des Klappverschlusses - beidseits jeweils von einem Spannband flankiert wird. Im Bereich der Spannbänder sind in den Klappdeckel sowie das Verschlussunterteil jeweils Nischen eingebracht, in welchen die Spannbänder - in Umfangsrichtung des Klappverschlusses im Wesentlichen bündig - bei geschlossenem Deckel liegen. Die Spannbänder sind bei dieser Gestaltung in Umfangsrichtung nicht unmittelbar an das Scharnier angeformt.

Entsprechend der EP 0 291 457 B2 ausgebildete Klappverschlüsse werden von verschiedenen Herstellern am Markt angeboten und haben sich auch bewährt. So weisen diese Klappverschlüsse, bei denen die Spannbändern von dem Filmscharnier in Mantel- bzw. Umfangsrichtung des Klappversschlusses getrennt sind, für diverse Anwendungen bessere Betriebseigenschaften auf, als die ebenfalls oben erwähnten Klappverschlüsse, bei denen das angesprochene kravatten- bzw. schmetterlingsförmige Band anstelle von vom Filmscharnier separaten Spannbändern vorgesehen sind.

Nachteilig ist bei den am Markt angebotenen, entsprechend der EP 0 291 457 B2 ausgebildeten Klappverschlüssen ist allerdings, dass ihr Herstellungsprozess dadurch verhältnismäßig teuer ist, dass die zu deren Herstellung verwendeten Spritzgussformen schmale Stege ausweisen müssen, die die in Umfangsrichtung des Klappverschlusses gegebene Trennung des Filmscharniers von den Spannbändern bewirken bzw. einen jeweils umfangsmäßig gegebenen Durchbruch zwischen dem Filmscharnier und dem jeweiligen Spannband erzeugen. Diese Stege sind besonders verschleißanfällig. Das Anspritzen der Spannbänder sowie des Filmscharniers erfolgt in der Regel so, dass der Deckel und das Verschlussunterteil in eine Spitzgussform in einer Relativstellung eingesetzt werden, die im Wesentlichen der Stellung entspricht, die beim fertigen Verschluss gegeben ist, wenn der Deckel gegenüber seiner geschlossenen Stellung um 180° verschwenkt ist. Die aus einer Oberform und einer Unterform bestehende Spritzgussform wird anschließend geschlossen, und die Spannbänder sowie das Filmscharnier angespritzt. Bezogen auf eine aufrechte Verschlussstellung erstrecken sich die angesprochenen Stege also beim Spitzgießen in vertikaler Richtung so, dass sie von der Unterform zur Oberform (oder von Oberform zur Unterform) zwischen dem anzuspritzenden Scharnier und dem jeweiligen anzuspritzenden Spannband durchlaufen. Das Vorsehen dieser verschließanfälligen Stege erhöht die Kosten für die Spritzgussformen, und somit auch die Herstellungskosten der Klappverschlüsse.

EP-A-0 727 361 offenbart einen Klappverschluss gemäß den Oberbegriff des Anspruchs 1.

Der vorliegenden Erfindung liegt nun die Aufgabe zugrunde einen betriebssicheren und kostengünstig herstellbaren Klappverschluss zu schaffen.

Der vorliegenden Erfindung liegt nun die Aufgabe zugrunde einen betriebssicheren und kostengünstig herstellbaren Klappverschluss zu schaffen. Erfindungsgemäß wird ein Klappverschluss gemäß Anspruch 1 vorgeschlagen. Eine erfindungsgemäße Spritzgussform für einen Klappverschluss ist Gegenstand des Anspruchs 12. Bevorzugte Gestaltungen sind Gegenstand der Unteransprüche.

Erfindungsgemäß wird als insbesondere ein Klappverschluss vorgeschlagen, der ein Verschlussunterteil sowie einen Klappdeckel aufweist. Der Klappdeckel ist mittels wenigstens eines Filmscharniers an das Verschlussunterteil angelenkt. Das Verschlussunterteil und der Klappdeckel sind überdies mittels eines oder mehrerer, vorzugsweise zwei, Spannbändern verbunden. Der minimale Abstand zwischen dem Spannband und dem Filmscharnier ist größer oder gleich 0 mm und kleiner oder gleich 0,8 mm, und zwar in der sich um die zentrale Längsachse des Klappverschlusses erstreckenden Umfangsrichtung betrachtet. In vorteilhafter Gestaltung ist dieser Abstand zwischen dem Spannband und dem Filmscharnier größer oder gleich 0 mm und kleiner oder gleich 0,6 mm, bevorzugt kleiner oder gleich 0,5 mm, bevorzugt kleiner oder gleich 0,4 mm, bevorzugt kleiner oder gleich 0,3 mm.

In besonders vorteilhafter Weiterbildung der Erfindung ist -in der sich um die zentrale Längsachse des Klappverschlusses erstreckenden Umfangsrichtung betracht - der maximale Abstand zwischen dem Spannband und dem Filmscharnier größer oder gleich 0 mm und kleiner oder gleich 0,6 mm, bevorzugt kleiner oder gleich 0,5 mm, bevorzugt kleiner oder gleich 0,4 mm, bevorzugt kleiner oder gleich 0,3 mm. Anzumerken ist, dass prinzipiell der zwischen dem Spannband und dem Filmscharnier in der erwähnten Umfangsrichtung gegebene Abstand einerseits zwischen den benachbarten bzw. einander zugewandten Seiten des Spannbandes und des Filmscharniers, und andererseits zwischen den einander abgewandten Seiten des Spannbandes und des Filmscharniers gemessen werden kann; es versteht sich dass sie die angegebenen maximalen Abstandswerte auf den Abstand der einander zugewandten Seiten beziehen.

Gemäß einer bevorzugten Ausgestaltung sind das Verschlussunterteil und der Klappdeckel mittels zweier Spannbänder verbunden, zwischen welchen in der sich um die zentrale Längsachse des Klappverschlusses gesehenen Umfangsrichtung ein Filmscharnier vorgesehen ist, mittels welchem der Klappdeckel an das Verschlussunterteil angelenkt ist. Dabei ist in bevorzugter Gestaltung vorgesehen, dass in der genannten Umfangsrichtung der Abstand zwischen dem ersten der beiden Spannbänder und dem Filmscharnier größer oder gleich 0 mm und kleiner oder gleich 0,8 mm, bevorzugt kleiner oder gleich 0,6 mm, bevorzugt kleiner oder gleich 0,5 mm, bevorzugt kleiner oder gleich 0,4 mm, bevorzugt kleiner oder gleich 0,3 mm ist, und dass in dieser Umfangsrichtung - der Abstand zwischen dem zweiten der beiden Spannbänder und dem Filmscharnier größer oder gleich 0 mm und kleiner oder gleich 0,8 mm, bevorzugt kleiner oder gleich 0,6 mm, bevorzugt kleiner oder gleich 0,5 mm, bevorzugt kleiner oder gleich 0,4 mm, bevorzugt kleiner oder gleich 0,3 mm, ist.

Bei dieser, zuletzt erwähnten Gestaltung kann gemäß einer Weiterbildung vorgesehen sein, dass der in der genannten Umfangsrichtung zwischen dem ersten Spannband und dem Filmscharnier gegebene Abstand größer oder gleich 0 mm und kleiner oder gleich 0,6 mm, bevorzugt kleiner oder gleich 0,5 mm, bevorzugt kleiner oder gleich 0,4 mm, bevorzugt kleiner oder gleich 0,3 mm ist. Ferner kann dabei vorgesehen sein, dass der in der genannten Umfangsrichtung zwischen dem zweiten Spannband und dem Filmscharnier gegebene maximale Abstand größer oder gleich 0 mm und kleiner oder gleich 0,8 mm, bevorzugt kleiner oder gleich 0,6 mm, bevorzugt kleiner oder gleich 0,5 mm, bevorzugt kleiner oder gleich 0,4 mm, bevorzugt kleiner oder gleich 0,3 mm ist. Auch hier gilt insbesondere - entsprechend obiger Erläuterung - , dass sich die angegebenen Abstandswerte auf die Abstände der jeweils einander zugewandten Seiten des betreffenden Spannbandes und des Filmscharniers beziehen.

Der erwähnte maximale Abstand ist jeweils größer oder gleich dem jeweils zugeordneten minimalen Abstand. Die angesprochenen Abstände können auch jeweils im Wesentlichen konstant sein, so dass der jeweilige maximale Abstand im Wesentlichen dem jeweiligen minimalen Abstand entspricht.

Die angegebenen Abstandswerte beziehen sich insbesondere auf die entsprechenden Abstände, die bei offenem und / oder geschlossenem Klappdeckel gegeben sind.

Der Klappverschluss ist insbesondere einteilig bzw. einstückig ausgebildet. Der Klappverschluss besteht insbesondere aus Kunststoff. Es kann vorgesehen sein, dass zur Bildung des Klappverschlusses unterschiedliche Kunststoffe aneinander angeformt sind. Der Klappverschlusses ist insbesondere ein Spritzgussteil. Das bzw. die Spannbänder sind vorzugsweise streifenförmig gestaltet, und beispielsweise mit einem im Wesentlichen rechteckigen Querschnitt versehen.

Es kann vorgesehen sein, dass in dem Verschlussunterteil für jedes Spannband eine, insbesondere separate, Nische vorgesehen ist, die beispielsweise als Vertiefung oder als Durchbruch gestaltet ist und am oberen, dem Klappdeckel zugewandten Ende des Verschlussunterteils offen ausläuft. Ferner kann vorgesehen sein, dass im Klappdeckel für jedes Spannband eine, insbesondere separate, Nische vorgesehen ist, die beispielsweise als Vertiefung oder als Durchbruch gestaltet ist und am (bei geschlossenem Klappdeckel) unteren, dem Verschlussunterteil zugewandten Ende des Klappdeckels offen ausläuft. Dabei kann vorgesehen sein, dass sich das jeweilige Spannband bei geschlossenem Klappdeckel in die ihm zugeordnete Nische bzw. die ihm zugeordneten Nischen erstreckt. Dies kann beispielsweise so sein, dass das Spannband bei geschlossenem Klappdeckel mit der Außenmantelfläche des Verschlussunterteils bzw. des Klappdeckels im Wesentlichen bündig abschließt.

Die Breite der jeweiligen Nische kann beispielsweise an die Breite des Spannbandes, dem diese Nische zugeordnet ist, angepasst sein, bzw. geringfügig größer sein.

Es kann vorgesehen sein, dass das jeweilige Spannband einerseits an eine Nischenbodenfläche einer Nische angeformt ist, die in das Verschlussunterteil eingebracht ist, und anderseits an eine Nischenbodenfläche einer Nische angeformt ist, die in den Klappdeckel eingebracht ist.

Der Klappverschluss ist insbesondere ein Schnappscharnierversschluss, und bzw. kann auch als Schnappscharnierversschluss bezeichnet werden.

In vorteilhafter Gestaltung ist der erfindungsgemäße Klappverschluss mittels eines erfindungsgemäßen Spritzgusswerkzeuges bzw. einer erfindungsgemäßen Spritzgussform hergestellt.

Im folgenden werden Ausführungsbeispiele der Erfindung näher erläutert. Dabei zeigt:
- Fig. 1: eine Draufsicht auf einen beispielhaften erfindungsgemäßen Klappverschluss in schematischer Darstellung:
- Fig. 2: eine Schnittansicht entlang der Linie II-II aus Fig. 1;
- Fig. 3: eine Schnittansicht entlang der Linie III-III aus Fig. 2;
- Fig. 4: eine Schnittansicht entlang der Linie IV-IV aus Fig. 2;
- Fig. 5: einen vergrößerten Ausschnitt aus Fig. 1;
- Fig. 6: einen vergrößerten Ausschnitt aus Fig. 3; und
- Fig.7: einen vergrößerten Ausschnitt aus Fig. 2.

Die Figuren zeigen ein Ausführungsbeispiel eines erfindungsgemäßen Klappverschlusses, der beispielsweise mit einer erfindungsgemäßen Spritzgussform hergestellt ist.

Der Klappverschluss 1 weist ein Verschlussunterteil 10 sowie einen Klappdeckel 12 auf. Der Klappdeckel 12 ist mittels eines Filmscharniers 14 an das Verschlussunterteil angelenkt.

Das Verschlussunterteil 10 sowie der Klappdeckel 12 weisen jeweils eine gerundete Mantelwand 16 bzw. 18 auf. Die Mantelwände 16, 18 weisen hier eine im wesentlichen elliptische Form auf bzw. sind an eine elliptische Form angenähert.

Im Verschlussunterteil 10 ist eine Austrittsöffnung 20 eingebracht, durch welche ein in einem Behälter, wie Duschgelflasche, Ketchupflasche oder dergleichen, befindliches Medium austreten kann, wenn der Klappverschluss 1 auf diesem angebracht ist. Die Austrittsöffnung 20 kann mittels des Klappdeckels 12 geöffnet und verschlossen werden.

Für das Abdichten in der geschlossenen Stellung des Klappdeckels 12 ist ein Dichtstutzen 22 auf der Klappdeckelinnenseite vorgesehen, der sich in der geschlossenen Stellung des Klappdeckels 12 mit seinem dem Klappdeckel 12 abgewandten Ende, insbesondere geringfügig, in die Austrittsöffnung 20 erstreckt und dort umfangsmäßig dichtend an der Mantelwand der Austrittsöffnung 20 anliegt. Anstelle eines solchen Dichtmechanismus 22 kann allerdings auch ein anders gestalteter Dichtmechanismus vorgesehen sein.

Der Klappdeckel 12 ist mit dem Verschlussunterteil 10 nicht nur über das Filmscharnier 14, sondern auch über zwei Spannbänder 24, 26 verbunden. Diese Spannbänder 24, 26 sind jeweils streifenförmig gestaltet.

In der sich um die zentrale Längsachse 28 des Klappverschlusses 1 erstreckenden Umfangsrichtung 30 ist das Filmscharnier 14 zwischen den beiden Spannbändern 24, 26 angeordnet.

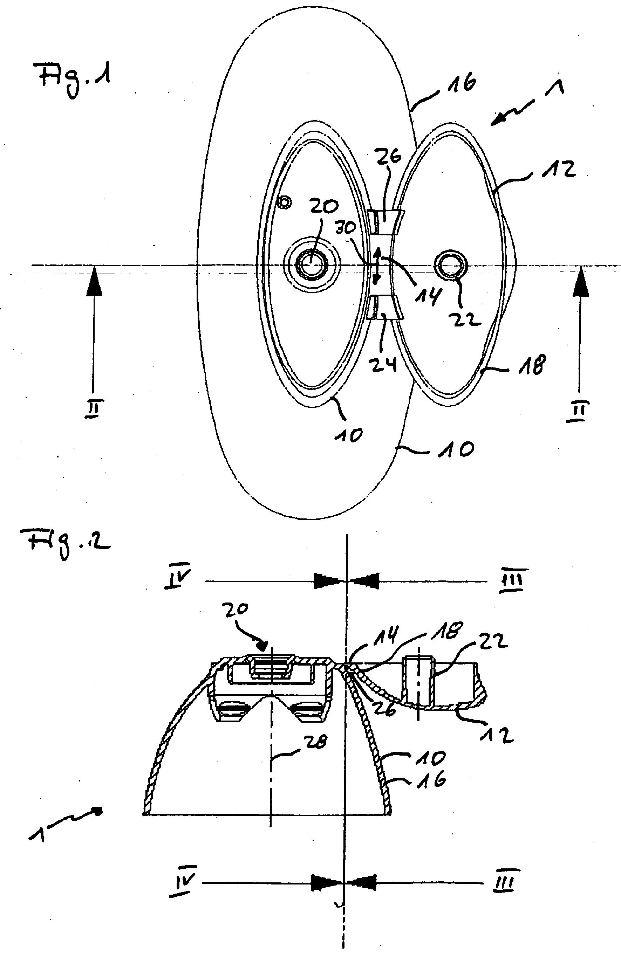

Wie gut in der Draufsicht gemäß Fig. 1 zu erkennen ist, kann mit bloßem Auge zwischen dem ersten Spannband 24 und dem Filmscharnier 14 einerseits, und zwischen dem zweiten Spannband 26 und dem Filmscharnier 14 (mit bloßem Auge) im wesentlichen kein Spalt erkennt werden.

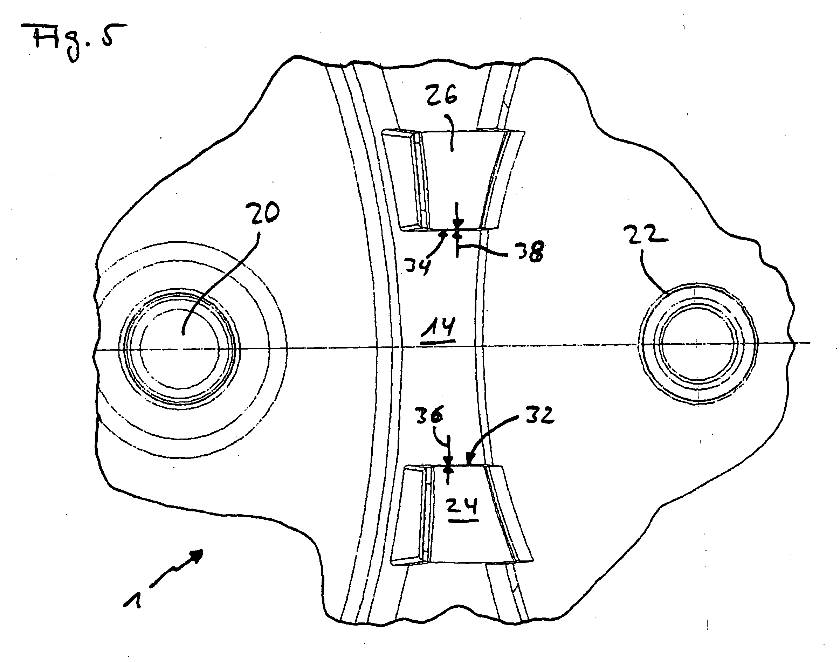

In dem in Fig. 5 vergrößerten Ausschnitt aus Fig. 1 kann an den erwähnten Stellen jeweils ein minimaler Spalt 32 bzw. 34 erkannt werden.

Bei einer Gestaltung, die mit dem erfindungsgemäßen Spritzgusswerkzeug bzw. der erfindungsgemäßen Spritzgussform hergestellt ist, ist dieser in Fig. 5 gezeigte jeweilige minimale Spalt 32 bzw. 34 auf die Konizität der Formteile des Spritzgusswerkzeuges zurückzuführen, wie im folgenden noch erläutert werden wird.

Die Spaltbreite des ersten Spalts 32 bzw. der in Umfangsrichtung 30 gegebene Abstand 36 zwischen dem ersten Spannband 24 und dem Filmscharnier 14 ist in dem Ausführungsbeispiel in etwa 0,3 mm.

In entsprechender Weise beträgt die Spaltbreite des zweiten Spaltes 34 bzw. der in Umfangsrichtung 30 gegebene Abstand 38 zwischen dem zweiten Spannband 26 und dem Filmscharnier 14 beim Ausführungsbeispiel gemäß den Fig. 1 bis 7 in etwa 0,3 mm.

Im Gegensatz hierzu ist bei den am Markt angebotenen, entsprechend der EP 0 291 457 B2 gefertigten Klappverschlüssen an den besagten Stellen ein deutlicher Spalt gegeben. Wie bereits oben angesprochen, wird dieser Spalt bei den angesprochenen bekannten Gestaltungen dadurch gebildet, dass eines der Formteile des Spritzgusswerkzeuges beim Spritzgießen von oben bzw. von unten den Spalt zwischen dem Spannband und dem Filmscharnier bildet.

Bei der Herstellung des in den Fig. 1 bis 7 gezeigten beispielhaften erfindungsgemäßen Klappverschlusses taucht kein Formteil durch den Spalt 32 bzw. 34 des gespritzten Artikels zwischen dem Spannband und dem Scharnier durch, sondern es touchieren sich vielmehr jeweils ein oberes Formteil des Spritzgusswerkzeuges und ein unteres Formteil des Spritzgusswerkzeuges in einer - insbesondere bezogen auf die Schließrichtung des Spritzgusswerkzeuges - konischen Fläche, und zwar insbesondere über dem Spannband 24 bzw. 26 und jeweils unter dem Filmscharnier 14.

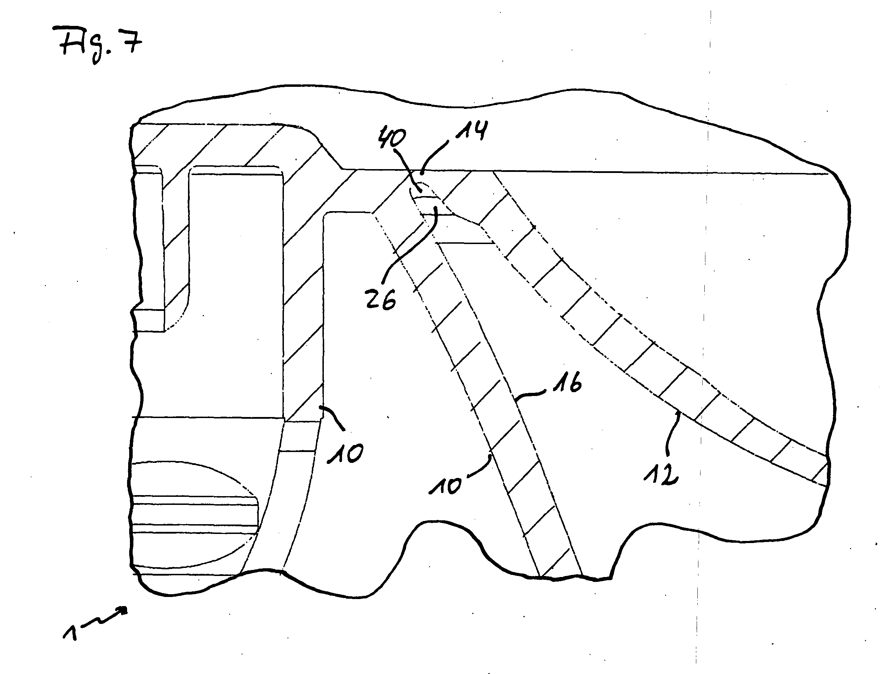

Dies wird auch gut anhand der Fig. 7 deutlich, die einen vergrößerten Ausschnitt aus Fig. 2 zeigt. Dort ist zu erkennen, dass das Filmscharnier 14 oberhalb des Spannbandes 24 bzw. 26 angeordnet ist. In vertikaler Richtung zwischen diesem Filmscharnier 14 ist ein in Seitenansicht erkennbarer materialfreier Raum zu erkennen, der durch das Bezugszeichen 40 schematisch angedeutet ist. Diese Materialfreiheit wird durch die zuvor angesprochenen konischen Flächen des oberen und des unteren Formteils gebildet. Beim Spritzgießen verlaufen diese konischen Flächen leicht geneigt zur Bildebene gemäß Fig. 7, und zwar so, dass sie zwischen dem vorderen Spannband und dem Scharnier 14 oben in die Bildebene eintauchen und zwischen dem - bezogen auf die Bildebene - hinteren Spannband und dem Scharnier unten in die Bildebene eintauchen.

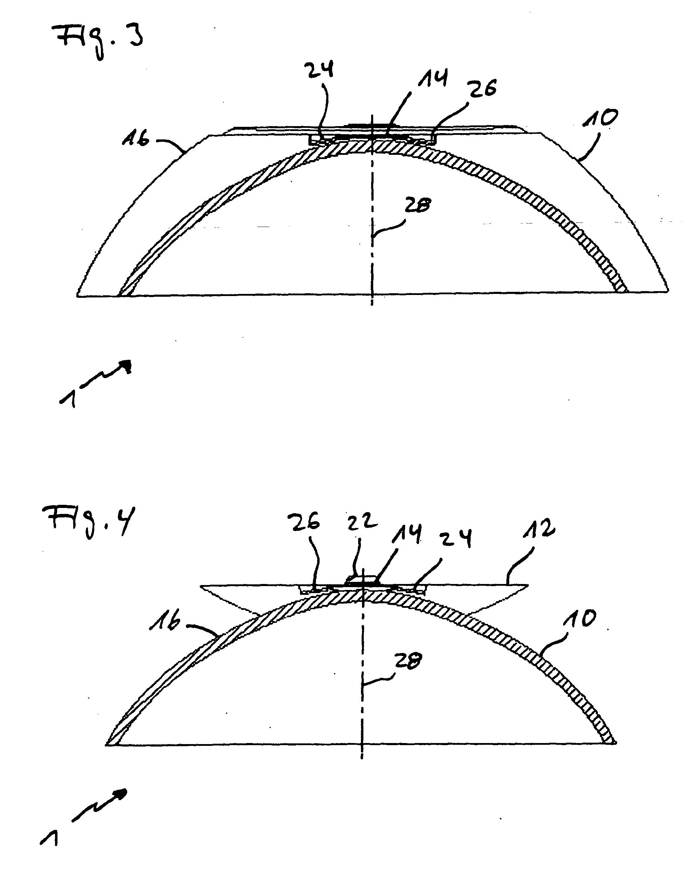

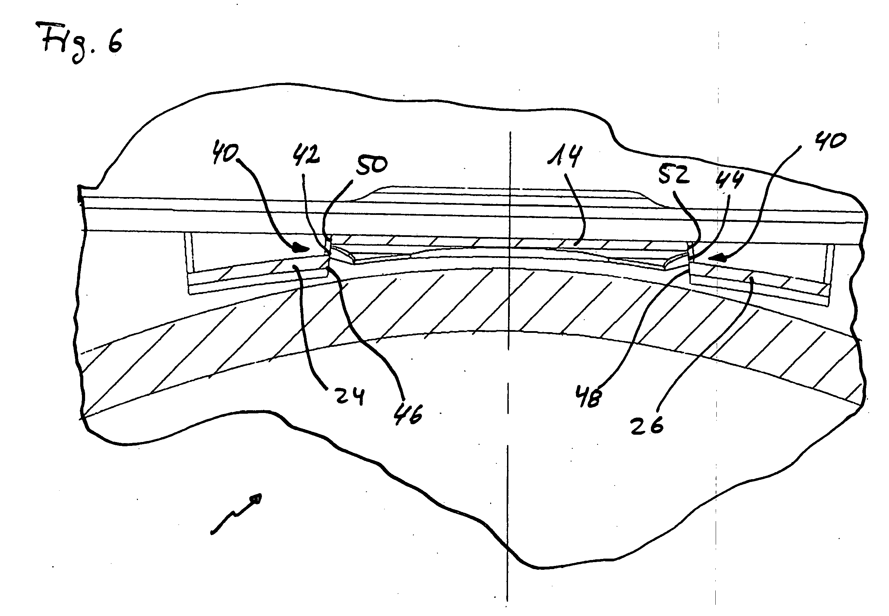

Auch in Fig. 6, die einen vergrößerten Ausschnitt aus Fig. 3 zeigt, ist dies gut zu erkennen. Dort sind zwei gegenüber einer vertikalen Achse geneigte Linien 42, 44 zu erkennen, die bezüglich der Schließrichtung des Spritzgusswerkzeuges, die in der Figur im wesentlichen vertikal ist, geneigt sind, und somit konisch verlaufen.

Dieser Bereich des Klappverschlusses 1 wird dadurch ausgebildet, dass ein unteres Formteil der Spritzgussform und ein oberes Formteil der Spritzgussform im Bereich der Linien 42, 44 jeweils eine konische Fläche ausbilden. Die konische Fläche des unteren Formteils erstreckt sich von unten bis zum Scharnier, und die obere konische Fläche des oberen Formteils erstreckt sich jeweils bis zum jeweiligen Spannband. Dabei liegen diese konischen Flächen flächig aneinander, so dass beim Spritzgießen der bereits angesprochene materialfreie Zwischenraum 40 ausgebildet wird. Das untere Formteil bildet dabei jeweils einen dem Scharnier zugewandten seitlichen Oberflächenabschnitt 46 des ersten Spannbandes 24 aus, der dem Scharnier 14 zugewandt ist, bzw. einen seitlichen Oberflächenabschnitt 48 des zweiten Spannbandes 26, der dem Scharnier zugewandt ist, und die jeweilige Schräge des oberen Formteils der Spritzgussform bildet dabei einen seitlichen Oberflächenabschnitt 50 bzw. 52 des Filmscharniers 14 aus, der dem ersten Spannband 24 bzw. im anderen Fall dem zweiten Spannband 26 zugewandt ist.

Der materialfreie Zwischenraum 40 ergibt sich dabei durch die Touchierfläche der beiden Formteile bzw. ihrer konischen Flächen.

Es ist gut zu erkennen, dass zwischen den Spannbändern 24, 26 und dem Filmscharnier 14 beim Herstellungsprozess kein Formteil mehr durchtaucht.

Wie gut in Fig. 1 zu erkennen ist, sind die Spannbänder 24, 26 jeweils in Nischen 54, 56, 58, 60 des Verschlussunterteils 10 bzw. des Klappdeckels 12 an dieses Verschlussunterteil 10 bzw. diesen Klappdeckel 12 angeformt, und zwar insbesondere an jeweiligen Bodenflächen dieser Nischen 54, 56, 58, 60.

Die Spannbänder 24, 26 können beispielsweise so sein bzw. so angeordnet sein, dass bei geschlossenem Klappdeckel 12 gespannt sind. Dabei kann insbesondere vorgesehen sein, dass die Spannung der Spannbänder 24, 26 bei einer Bewegung des Klappdeckels 12 von seiner geschlossenen Stellung in seine offene Stellung geringer wird bzw. stetig geringer wird. Der Klappverschluss 1 kann ferner auf der den Spannbändern 24, 26 und dem Filmscharnier gegenüberliegenden Seite (ihres Mantels) einen Verschluss bzw. Haltemechanismus, wie beispielsweise Schnapp- bzw. Rastverschluss oder Reibverschluss, aufweisen.

Die Spannbänder 24, 26 sind entlang ihrer Erstreckung zwischen ihren jeweiligen endseitigen Ansätzen bzw. Anformstellen jeweils vom Filmscharnier 14 getrennt, also nicht an dieses angeformt.

Anhand des in den Fig. gezeigten Ausführungsbeispiels wird bzw. wurde eine Gestaltung erläutert, bei der ein Filmscharnier 14 und zwei Spannbänder 24, 26 vorgesehen sind.

Anzumerken ist, dass die konischen Flächen je nach Produkt unterschiedlich ausgebildet und insbesondere unterschiedlich geneigt sein können.

Es sei ferner angemerkt, dass sich die Erfindung auch auf andere Ausführungsbeispiele bezieht bzw. die erfindungsgemäße Spritzgussform auch für anders gestaltete Klappverschlüsse eingesetzt werden kann. Beispielsweise kann vorgesehen sein, dass ein Spannband in der Mitte zwischen zwei Filmscharnieren angeordnet ist. Ferner können das Spannband bzw. die Spannbänder verschiedenste Geometrien aufweisen, und zwar insbesondere hinsichtlich ihrer Wölbung oder hinsichtlich ihres Querschnitts. Auch das Filmscharnier 14 bzw. die Filmscharniere können verschieden breit oder verschieden dick sein.

Anzumerken ist, dass im Rahmen dieser Offenbarung der Begriff "Klappverschluss" verwendet wurde. Stattdessen kann auch der Begriff "Schnappscharnierverschluss" verwendet werden. Der Klappverschluss kann auf einem Behälter, wie beispielsweise einer Tube oder Flasche aufgesetzt sein.

Insbesondere anhand des Ausführungsbeispiels wird klar, dass sich die oberen und unteren Formteile des Spritzgusswerkzeuges vereinfacht herstellen lassen, und somit der Klappverschluss vereinfacht hergestellt werden kann. Dies bezieht sich insbesondere auf die Gestaltung im Bereich des Filmscharnieres bzw. des Spannbandes.

Der Klappverschluss 1 ist aus Kunststoff hergestellt. Das Spritzgusswerkzeug lässt sich auch hinsichtlich seiner Verschleißeigenschaften und seiner Stabilität verbessern.

Anzumerken ist, dass zuvor angesprochen wurde, dass das obere Formteil und das untere Formteil konische Flächen aufweisen. Es können auch davon abweichende Flächen vorgesehen sein, welche Kontaktflächen zwischen dem oberen und dem unteren Formteil bilden.

### Bezugszeichen

- 1: Klappverschluss
- 10: Verschlussunterteil
- 12: Klappdeckel
- 14: Filmscharnier
- 16: Mantelwand von 10
- 18: Mantelwand von 12
- 20: Austrittsöffnung für Medium
- 22: Dichtstutzen
- 24: erstes Spannband
- 26: zweites Spannband
- 28: zentrale Längsachse von 1
- 30: Umfangsrichtung von 28
- 32: erster Spalt
- 34: zweiter Spalt
- 36: Abstand zwischen 24 und 14
- 38: Abstand zwischen 26 und 14
- 40: materialfreier Raum durch konische Flächen der Formteile erzeugt
- 42: schräge Linie
- 44: schräge Linie
- 46: seitlicher Oberflächenabschnitt von 24
- 48: seitlicher Oberflächenabschnitt von 26
- 50: seitlicher Oberflächenabschnitt von 14
- 52: seitlicher Oberflächenabschnitt von 14
- 54: Nische
- 56: Nische
- 58: Nische
- 60: Nische

## Patentansprüche

1. Klappverschluss mit einem Verschlussunterteil (10) und einem Klappdeckel (12), der mittels wenigstens eines Filmscharniers (14) an das Verschlussunterteil (10) angelenkt ist, wobei der Klappdeckel (12) und das Verschlussunterteil (10) ferner über zumindest ein Spannband (24, 26) verbunden sind,
**dadurch gekennzeichnet, dass**
der maximale Abstand zwischen dem Spannband (24, 26) und dem unmittelbar daneben angeordneten Filmscharnier (14) in der sich um eine zentrale Längsachse (28) des Klappverschlusses (1) erstreckenden Umfangsrichtung kleiner oder gleich 0,8 mm ist und der minimale Abstand größer oder gleich 0 mm ist.

2. Klappverschluss nach Anspruch 1, **dadurch gekennzeichnet, dass** der Klappdeckel (12) an das Verschlussunterteil (10) mittels, insbesondere genau, eines Filmscharniers (14) angelenkt ist und der Klappdeckel (12) und das Verschlussunterteil (10) über, insbesondere genau, zwei Spannbänder (24, 26) verbunden sind, wobei das Filmscharnier (14) in der sich um die zentrale Längsachse (28) des Klappverschlusses (1) erstreckenden Umfangsrichtung (30) zwischen den beiden Spannbänder (24, 26) angeordnet ist, und wobei der, insbesondere minimale, Abstand zwischen dem ersten (24) der beiden Spannbänder (24, 26) und dem Filmscharnier (14) kleiner oder gleich 0,8 mm ist, und wobei der, insbesondere minimale, Abstand zwischen dem zweiten (26) der beiden Spannbänder (24, 26) und dem Filmscharnier (14) kleiner oder gleich 0,8 mm ist.

3. Klappverschluss nach einem der vorangehenden Ansprüche, **dadurch gekennzeichnet, dass** der das Verschlussunterteil (10) und der Klappdeckel (12) jeweils eine gerundete Mantelwand (16 bzw. 18) aufweisen.

4. Klappverschluss nach einem der vorangehenden Ansprüche, **dadurch gekennzeichnet, dass** das bzw. die Spannbänder (24, 26) in der Schließstellung des Klappdeckels (12) gestreckt sind, und dass das bzw. die Spannbänder (24, 26) in der vollständig geöffneten, insbesondere von außen unbelasteten, Stellung des Klappdeckels (12) in einer gewölbten Fläche verlaufen.

5. Klappverschluss nach einem der vorangehenden Ansprüche, **dadurch gekennzeichnet, dass** die Ansätze der Spannbänder auf Nischenbodenflächen angebracht sind, die zur Trennebene zwischen dem Klappdeckels (12) und dem Verschlussunterteil (10) derart geneigt verlaufen, dass die dem Filmscharnier (14) näher liegenden Seiten der, insbesondere streifenförmigen, Spannbänder kürzer als die entfernteren Seiten sind, die Spannbänder (24, 26) vom Ansatz in Nischen (54, 56, 58, 60) in den Mantelwänden (16, 18) verlaufen und über ihre gesamte Länge einen nahezu gleichbleibenden scharnierfreien Querschnitt aufweisen.

6. Klappverschluss nach Anspruch 5, **dadurch gekennzeichnet, dass** die Spannbänder (24, 26) in der Schließstellung des Klappdeckels (12) mit ihren äußersten Teilflächen mit den Außenoberflächen der Mantelwände (16, 18) fluchten.

7. Schnappscharnierverschluss nach einem der Ansprüche 5 und 6, **dadurch gekennzeichnet, dass** die Ansätze der Spannbänder (24, 26) in den Nischenbodenflächen gerundet angeformt sind.

8. Schnappscharnierverschluss nach einem der Ansprüche 5 bis 7, **dadurch gekennzeichnet, dass** die Nischen (54, 56, 58, 60) mindestens annähernd der Form und Größe der gestreckten Spannbänder (24, 26) entsprechen, so dass diese in der Schließstellung Klappdeckels (12) vollständig in den Nischen (54, 56, 58, 60) aufgenommen sind und diese abdecken.

9. Schnappscharnierverschluss nach einem der vorangehenden Ansprüche, **dadurch gekennzeichnet, dass** die Querschnittsformen der Spannbänder (24, 26) mindestens annähernd einem flachen Rechteck entsprechen.

10. Schnappscharnierverschluss nach einem der vorangehenden Ansprüche, **dadurch gekennzeichnet, dass** die Querschnittsformen der Spannbänder (24, 26) mindestens einseitig konvex ist.

11. Klappverschluss nach einem der Ansprüche 3 bis 10, **dadurch gekennzeichnet, dass** die Mantelwand (16) des Verschlussunterteils (10) und die Mantelwand (18) des Klappdeckels (12) in der Schließstellung des Klappdeckels (12) deckungsgleich vertikal übereinander stehen.

12. Spritzgussform für die Herstellung eines aus Kunststoff bestehenden und gemäß einem der vorangehenden Ansprüche ausgebildeten Klappverschlusses, wobei die Spritzgussform ein erstes Formteil und ein zweiten Formteil aufweist und wobei das erste Formteil die Negativkontur des seitlichen Oberflächenabschnittes (46. bzw. 48) des Spannbandes (24 bzw. 26) ausbildet, der dem Filmscharnier (14) in der sich um die zentrale Längsachse (28) des Klappverschlusses (1) erstreckenden Umfangsrichtung (30) benachbart bzw. zugewandt ist, und wobei das zweite Formteil die Negativkontur des seitlichen Oberflächenabschnittes (50 bzw. 50) des Filmscharniers (14) ausbildet, der dem Spannband (24 bzw. 26) in der sich um die zentrale Längsachse (28) des Klappverschlusses (1) erstreckenden Umfangsrichturig (30) benachbart bzw. zugewandt ist, wobei insbesondere vorgesehen ist, dass eines dieser beiden Formteile die Oberform und das andere dieser beiden Formteile die Unterform dieser Spritzgussform bildet, und wobei der maximale Abstand zwischen dem Spannband (24, 26) und dem unmittelbar daneben angeordneten Filmscharnier (14) in der sich um eine zentrale Längsachse (28) des Klappverschlusses (1) erstreckenden Umfangsrichtung kleiner oder gleich 0,8 mm ist und der minimale Abstand größer oder gleich 0 mm ist.

13. Spritzgussform nach Anspruch 12, **dadurch gekennzeichnet, dass** das erste Formteil und das zweite Formteil zum Schließen der Spritzgussform Hohlräume ausbilden, von denen einer im Wesentlichen der Negativkontur des zu erzeugenden Filmscharniers (14) entspricht und von den für jedes zu erzeugende Spannband (24, 26) jeweils einer im Wesentlichen der jeweiligen Negativkontur des jeweils zu erzeugenden Spannbandes (24, 26) entspricht, und dass das erste Formteil wenigstens einen ersten, insbesondere gegenüber der Schließrichtung der Spritzgussform, konisch geneigten Wandabschnitt aufweist und dass das zweite Formteil wenigstens einen zweiten, insbesondere gegenüber der Schließrichtung, konisch geneigten Wandabschnitt aufweist, wobei ein erster Teilabschnitt dieses ersten Wandabschnitts bei geschlossener Spritzgussform flächig an einem ersten Teilabschnitt dieses zweiten Wandabschnitts anliegt, und wobei ein zweiter Teilabschnitt dieses ersten Wandabschnitts bei geschlossener Spritzgussform die Negativkontur eines seitlichen Oberflächenabschnittes (46. bzw. 48) eines Spannbandes (24, 26) ausbildet, der dem Filmscharnier (14) in der sich um die zentrale Längsachse (28) des Klappverschlusses (1) erstreckenden Umfangsrichtung (30) benachbart bzw. zugewandt ist, und wobei ein zweiter Teilabschnitt dieses zweiten Wandabschnitts bei geschlossener Spritzgussform die Negativkontur des seitlichen Oberflächenabschnittes (50 bzw. 50) des Filmscharniers (14) ausbildet, der dem diesem Spannband (24 bzw. 26) in der sich um die zentrale Längsachse (28) des Klappverschlusses (1) erstreckenden Umfangsrichtung (30) benachbart bzw. zugewandt ist.

14. Spritzgussform nach Anspruch 12, **dadurch gekennzeichnet, dass** der erste Wandabschnitt des ersten Formteils und der zweite Wandabschnitt des zweiten Formteils bei geschlossener Spritzgussform zwischen dem zweiten Teilabschnitt dieses ersten Wandabschnitts und dem zweiten Teilabschnitt dieses zweiten Wandabschnitts mit ihren jeweiligen ersten Teilabschnitten flächig aneinander liegen.

## Claims

1. Hinged closure with a lower part (10) of the closure and a hinged lid (12), which is pivoted to the lower part (1) of the closure by at least one film hinge (14), wherein, furthermore, the hinged lid (12) and the lower part (1) of the closure are connected by at least one tension band (24, 26),
**characterized in that**
the maximum distance between the tension band (24, 26) and the film hinge (14), which is arranged directly next to the tension band (24, 26), is smaller than or equal to 0.8 mm with respect to the circumferential direction, which extends around a central longitudinal axis (28) of the hinged closure (1), and the minimal distance is larger than or equal to 0 mm.

2. Hinged closure according to claim 1, **characterized in that** the hinged lid (12) is pivoted to the lower part (1) of the closure by a film hinge (14), in particular by exactly one film hinge (14), and that the hinged lid (12) and the lower part (10) of the closure are connected by two tension bands (24, 26), in particular by exactly two tension bands (24, 26), wherein the film hinge (14) is arranged between the two tension bands (24, 26) with respect to the circumferential direction (30), which extends around the central longitudinal axis (28) of the hinged closure (1), and wherein the distance, in particular the minimal distance, between the first (24) of the two tension bands (24, 26) and the film hinge (14) is smaller than or equal to 0.8 mm, and wherein the distance, in particular the minimal distance, between the second (26) of the two tension bands (24, 26) and the film hinge (14) is smaller than or equal to 0.8 mm.

3. Hinged closure according to one of the previous claims, **characterized in that** the lower part (10) of the closure and the hinged lid (12) have a curved outer wall (16 or, respectively, 18), respectively.

4. Hinged closure according to one of the previous claims, **characterized in that** the tension band, or respectively, the tension bands (24, 26), are stretched, in the closing position of the hinged lid (12), and that the tension band, or respectively, the tension bands (24, 26), are running along a curved surface, in the position of complete opening of the hinged lid (12), in particular, in the position of the hinged lid (12), in which the same is not stressed from the outside.

5. Hinged closure according to one of the previous claims, **characterized in that** the bases of the tension bands are attached to recess bottom areas, which are running inclined with respect to the separating plane existing between the hinged lid (12) and the lower part (10) of the closure, such that the side faces of the tension bands, which are closer to the film hinge (14), are formed shorter than the more distant side faces, the tension bands being formed stripe-shaped, in particular, and that the tension bands (24, 26) are originating in recesses (54, 56, 58, 60) of the outer walls (16, 18) and which tension bands, almost constantly along their whole length, have a cross section free of the hinged lid.

6. Hinged closure according to claim 5, **characterized in that** the tension bands (24, 26), in the closing position of the hinged lid (12), are aligned with their outer partial areas with the outer surfaces of the outer walls (16, 18).

7. Snap-hinged closure according to one of the claims 5 or 6, **characterized in that** the bases of the tension bands (24, 26) are moulded in a curved way into the recess bottom areas.

8. Snap-hinged closure according to one of the claims 5 to 7, **characterized in that** the recesses (54, 56, 58, 60) are corresponding at least approximately to the shape and size of the stretched tension bands (24, 26) such that the latter are received completely by the recesses (54, 56, 58, 60) and are covering the same, in the closing position of the hinged lid (12).

9. Snap-hinged closure according one of the previous claims, **characterized in that** the shapes of the cross-sections of the tension bands (24, 26) are corresponding at least approximately to a plane rectangle.

10. Snap-hinged closure according one of the previous claims, **characterized in that** the shapes of the cross-sections of the tension bands (24, 26) are convex at least on one side.

11. Hinged closure according to one of the claims 3 to 10, **characterized in that** the outer wall (16) of the lower part (10) of the closure and the outer wall (18) of the hinged lid (12) are congruently arranged vertically on top of each other.

12. Injection mould for the fabrication of a hinged closure consisting of plastics and being configured according to one of the previous claims, wherein the injection mould has a first mould part and a second mould part and wherein the first mould part is configured to form the negative contour of the lateral surface section (46 or, respectively, 48) of the tension band (24, 26), which lateral surface section is adjacent to, or, respectively, facing, the film hinge (14) in the circumferential direction, which extends around a central longitudinal axis (28) of the hinged closure (1), and wherein the second mould part is configured to form the negative contour of the lateral surface section (50 or, respectively, 50) of the film hinge (14), which lateral surface section is adjacent to, or, respectively, facing, the tension band (24, 26) in the circumferential direction, which extends around a central longitudinal axis (28) of the hinged closure (1), wherein it is provided, in particular, that one of said two mould parts forms the upper mould and the other one of said two mould parts forms the lower mould of the injection mould, and wherein the maximum distance between the tension band (24, 26) and the film hinge (14), which is arranged directly next to the tension band (24, 26), is smaller than or equal to 0.8 mm with respect to the circumferential direction, which extends around a central longitudinal axis (28) of the hinged closure (1), and the minimal distance is larger than or equal to 0 mm.

13. Injection mould according to claim 12, **characterized in that** the first mould part and the second mould part are forming hollow spaces for the purpose of closing the injection mould, wherein one of said hollow spaces substantially corresponds to the negative contour of the film hinge (14) to be moulded and, for each tension band (24, 26) to be moulded, one of said hollow spaces substantially corresponds to the negative contour of the tension band (24, 26) to be moulded, and that the first mould part has at least one wall section, which, in particular with respect to the direction of closing, is conically sloped, and that the second mould part has at least one wall section, which, in particular with respect to the direction of closing, is conically sloped, wherein, in the closed position of the injection mould, a first partial section of said first wall section laminary touches a first partial section of said second wall section, and wherein, in the closed position of the injection mould, a second partial section of said first wall section forms the negative contour of a lateral surface section (46 or, respectively, 48) of a tension band (24, 26), which lateral surface section is adjacent to, or, respectively, facing, the film hinge (14) in the circumferential direction, which extends around a central longitudinal axis (28) of the hinged closure (1), and wherein, in the closed position of the injection mould, a second partial section of said second wall section forms the negative contour of the lateral surface section (50 or, respectively, 50) of the film hinge (14), which lateral surface section is adjacent to, or, respectively, facing, the tension band (24 or, respectively, 26) in the circumferential direction, which extends around a central longitudinal axis (28) of the hinged closure (1).

14. Injection mould according to claim 12, **characterized in that**, in the closed position of the injection mould, the first wall section of the first mould part and the second wall section of the second mould part are laminary touching each other with their respective first partial sections, between the second partial section of said first wall section and the second partial section of said second wall section.

## Revendications

1. Fermeture articulée, comportant une partie inférieure (10) et un couvercle rabattable (12), qui est articulé à la partie inférieure (10) par l'intermédiaire d'au moins une charnière flexible (14), ledit couvercle rabattable (12) et ladite partie inférieure (10) étant reliées, en outre, l'un à l'autre par l'intermédiaire d'au moins une patte de fixation (24, 26), **caractérisée en ce que** la distance maximale entre la patte de fixation (24, 26) et la charnière flexible (14) directement adjacente, dans la direction circonférentielle s'étendant autour d'un axe longitudinal (28) central de la fermeture articulée (1), est inférieure ou égale à 0,8 mm et la distance minimale est supérieure ou égale à 0 mm.

2. Fermeture articulée selon la revendication 1, **caractérisée en ce que** le couvercle rabattable (12) est articulé à la partie inférieure (10) par l'intermédiaire d'une, en particulier exactement une charnière flexible (14), et le couvercle rabattable (12) et la partie inférieure (10) sont reliés l'un à l'autre par l'intermédiaire de deux, en particulier exactement deux pattes de fixation (24, 26), ladite charnière flexible (14), dans la direction circonférentielle (30) s'étendant autour de l'axe longitudinal (28) central de la fermeture articulée (1), étant disposée entre les deux pattes de fixation (24, 26), et la distance, en particulier minimale, entre la première (24) des deux pattes de fixation (24, 26) et la charnière flexible (14) est inférieure ou égale à 0,8 mm, et la distance, en particulier minimale, entre la seconde (26) des deux pattes de fixation (24, 26) et la charnière flexible (14) est inférieure ou égale à 0,8 mm.

3. Fermeture articulée selon l'une quelconque des revendications précédentes, **caractérisée en ce que** la partie inférieure (10) et le couvercle rabattable (12) comportent respectivement une paroi périphérique (16 et 18) arrondie.

4. Fermeture articulée selon l'une quelconque des revendications précédentes, **caractérisée en ce que** la ou les pattes de fixation (24, 26) sont tendues dans la position de fermeture du couvercle rabattable (12), et **en ce que** la ou les pattes de fixation (24, 26) s'étendent en formant une surface bombée dans la position totalement ouverte, en particulier la position non sollicitée de l'extérieur, du couvercle rabattable (12).

5. Fermeture articulée selon l'une quelconque des revendications précédentes, **caractérisée en ce que** les embases des pattes de fixation sont attachées sur des fonds de niches, qui sont inclinés vers le plan de séparation entre le couvercle rabattable (12) et la partie inférieure (10), de telle sorte que les côtés, les plus proches de la charnière flexible (14), des pattes de fixation, en particulier en forme de bandes, sont plus courts que les côtés plus éloignés, les pattes de fixation (24, 26) s'étendent à partir de leur embase dans les niches (54, 56, 58, 60) dans les parois périphériques (16, 18) et possèdent sur toute leur longueur une section sans charnière à peu près uniforme.

6. Fermeture articulée selon la revendication 5, **caractérisée en ce que**, dans la position de fermeture du couvercle rabattable (12), les portions extérieures des pattes de fixation (24, 26) sont en alignement avec les surfaces extérieures des parois périphériques (16, 18).

7. Fermeture à charnière encliquetable selon les revendications 5 et 6, **caractérisée en ce que** les embases des pattes de fixation (24, 26) sont formées sur les fonds des niches en étant arrondies.

8. Fermeture à charnière encliquetable selon l'une quelconque des revendications 5 à 7, **caractérisée en ce que** les niches (54, 56, 58, 60) correspondent au moins à peu près à la forme et à la taille des pattes de fixation (24, 26) étirées, de telle sorte que ces dernières, dans la position de fermeture du couvercle rabattable (12), sont totalement logées dans les niches (54, 56, 58, 60) et masquent celles-ci.

9. Fermeture à charnière encliquetable selon l'une quelconque des revendications précédentes, **caractérisée en ce que** les formes des sections des pattes de fixation (24, 26) correspondent au moins à peu près à un rectangle plat.

10. Fermeture à charnière encliquetable selon l'une quelconque des revendications précédentes, **caractérisée en ce que** la forme de la section des pattes de fixation (24, 26) est convexe au moins sur un côté.

11. Fermeture à charnière selon l'une quelconque des revendications 3 à 10, **caractérisée en ce que**, dans la position de fermeture du couvercle rabattable (12), la paroi périphérique (16) de la partie inférieure (10) et la paroi périphérique (18) du partie inférieure (10) se superposent strictement dans le sens vertical.

12. Moule d'injection pour la fabrication d'une fermeture articulée, réalisée en matière plastique et configurée selon l'une des revendications précédentes, le moule d'injection comportant une première partie et une deuxième partie, et ladite première partie du moule formant le contour négatif de la portion de surface latérale (46 et 48) de la patte de fixation (24 et 26), laquelle, dans la direction circonférentielle (30) s'étendant autour de l'axe longitudinal (28) central de la fermeture articulée (1), est adjacente à la charnière flexible (14) et est orientée vers celle-ci, et ladite deuxième partie du moule formant le contour négatif de la portion de surface latérale (50 et 50) de la charnière flexible (14), laquelle, dans la direction circonférentielle (30) s'étendant autour de l'axe longitudinal (28) central de la fermeture articulée (1), est adjacente à la patte de fixation (24 et 26) et est orientée vers celle-ci, sachant qu'il est prévu en particulier que l'une de ces deux parties du moule forme le moule supérieur et l'autre de ces deux parties forme le moule inférieur dudit moule d'injection, et sachant que la distance maximale entre la patte de fixation (24, 26) et la charnière flexible (14) directement adjacente, dans la direction circonférentielle s'étendant autour d'un axe longitudinal (28) central de la fermeture articulée (1), est inférieure ou égale à 0,8 mm et la distance minimale est supérieure ou égale à 0 mm.

13. Moule d'injection selon la revendication 12, **caractérisé en ce que**, pour la fermeture du moule d'injection, la première partie du moule et la deuxième partie du moule forment des cavités, parmi lesquelles l'une correspond sensiblement au contour négatif de la charnière flexible (14) à réaliser et parmi lesquelles pour chaque patte de fixation (24, 26) à réaliser respectivement l'une correspond sensiblement au contour négatif respectif de la patte de fixation (24, 26) à réaliser respectivement, et **en ce que** la première partie du moule comporte au moins une première partie de paroi inclinée de manière conique, en particulier par rapport au sens de fermeture du moule d'injection, et **en ce que** la deuxième partie du moule comporte au moins une deuxième partie de paroi inclinée de manière conique, en particulier par rapport au sens de fermeture, sachant que, lorsque le moule d'injection est fermé, une première portion de ladite première partie de paroi est en appui plan contre une première portion de ladite deuxième partie de paroi, et sachant que, lorsque le moule d'injection est fermé, une deuxième portion de ladite première partie de paroi forme le contour négatif d'une portion de surface latérale (46 ou 48) d'une patte de fixation (24 ou 26), laquelle, dans la direction circonférentielle (30) s'étendant autour de l'axe longitudinal (28) central de la fermeture articulée (1), est adjacente à la charnière flexible (14) et est orientée vers celle-ci, et sachant que, lorsque le moule d'injection est fermé, une deuxième portion de ladite deuxième partie de paroi forme le contour négatif de la portion de surface latérale (50 ou 50) de la charnière flexible (14), laquelle, dans la direction circonférentielle (30) s'étendant autour de l'axe longitudinal (28) central de la fermeture articulée (1), est adjacente à la patte de fixation (24 ou 26) et est orientée vers celle-ci.

14. Moule d'injection selon la revendication 12, **caractérisé en ce que**, lorsque le moule d'injection est fermé, la première partie de paroi de la première partie du moule et la deuxième partie de paroi de la deuxième partie du moule sont en appui plan l'une contre l'autre avec leurs premières portions respectives entre la deuxième portion de ladite première partie de paroi et la deuxième portion de ladite deuxième partie de paroi.
